# EUROPEAN PATENT SPECIFICATION

(11) **EP 1 750 423 B1**
(45) Date of publication and mention of the grant of the patent: **23.01.2008**
(21) Application number: 05107115.7
(22) Date of filing: 02.08.2005
(51) Int. Cl.: H04M 1/725, H04B 11/00

(54) **Vibratory data communication between devices**
Datenkommunikation zwischen Geräten mittels Vibrationen
Communication de données entre dispositifs au moyen de vibrations

(43) Date of publication of application: 07.02.2007
(73) Proprietor: Research In Motion Limited, Waterloo, Ontario N2L 3W8 (CA)
(72) Inventor: Orr, Kevin, N3B 3C9, Elmira, (CA)
(74) Representative: Rickard, David John

(56) References cited:
- EP-A- 1 260 949
- EP-A2- 1 246 432
- WO-A-00/21020
- WO-A-00/31994
- WO-A-03/096593
- WO-A-20/04017653
- WO-A-20/05055566
- DE-A1- 10 234 721

## Description

The present application relates to handheld devices and, in particular, to methods and systems for communicating between devices using vibrations.

The number and variety of handheld devices used for communication continues to grow at a rapid pace. Most common are handheld mobile phones and personal digital assistants. The mobile phones are typically enabled for cellular telephone communications using one or more standard protocols, like GPRS or GSM. Other wireless communication options are growing, especially in the area of local or near field communications. For example, many handheld devices or mobile device are now capable of Bluetooth^{™} communications. These near field or local communications may be device-to-device, wherein one handheld user wishes to establish a link with another handheld user. In some cases, the communications may be between a handheld user and a kiosk, terminal or other fixed computer location.

The local device-to-device and/or device-to-terminal communications rely upon an RF link and are, therefore, susceptible to interception by third parties. In some cases, these links might be encrypted, but the creation of the encrypted link often involves exchange of seed values or PINs for generation of a key set to facilitate the encryption. This exchange can involve manual input and the disclosure of the seed value or PIN in an unsecure manner.

It would be advantageous to provide for another method of facilitating local device-to-device or device-to-terminal communication that does not rely upon a two-way RF link. In this regard, WO2005/055566 discloses a method of transmitting digital data from a first mobile phone to a second mobile phone using sonic communications and relying upon the built-in microphone and loudspeaker already present in conventional mobile phone devices.

### GENERAL

The present application preferably provides a system and method for communicating data from or to a device using vibrations from another device. One of the devices includes a vibrator and the other device includes a sensor for detecting vibrations. The devices are placed in physical contact either directly or through an intermediate medium, such that vibrations generated in the casing of one device are transferred to the casing of the other device. Vibrations are generated by the vibrator in response to a drive signal modulated by an information signal. The modulation may be on-off keying. Modulated vibrations are detected by the sensor in the other device and are demodulated to obtain the information signal.

In one aspect the present application provides a method of transmitting signals from a first device to a second device. The first device has a main body including a vibration device. The second device includes a casing and a sensor for detecting vibrations. The method includes the steps of creating physical contact between the main body of the first device and the casing of the second device, generating a drive signal for driving the vibration device, modulating the drive signal with an information signal to generate a modulated driving signal, and vibrating the main body by driving the vibration device with the modulated driving signal; detecting vibrations transferred from the main body to the second device using the sensor; and obtaining the information signal from the detected vibrations.

In yet another aspect, the present application provides a system for exchanging between two devices. The system includes a first device and a second device. The first device and second device each include a processor housed within the main body, and a memory connected to the processor. The first device comprises a main body; a vibration device housed within said main body and generating vibrations in response to a modulated driving signal to vibrate said main body and a vibration driver operating under the control of said processor and generating the modulated driving signal, wherein said modulated driving signal comprises a drive signal modulated by an information signal stored in said memory. The second device comprises a sensing device adapted to detect vibrations transferred to said second device from said main body, and adapted to output a detected signal to the processor, wherein said detected signal comprises said information signal obtained by demodulating said detected vibrations.

Vibratory communications between the first device and the second device are facilitated through kinetic transfer of vibrations through their respective main bodies when placed in physical contact.

In yet a further aspect, the present application provides a receiving device for receiving signals from a transmitting device, the transmitting device having a main body, a vibration device housed within said main body and generating vibrations of said main body in response to a modulated driving signal; and a vibration driver for generating the modulated driving signal, wherein the modulated driving signal comprises a drive signal modulated by an information signal, and wherein the receiving device comprises a casing; a processor; and a sensing device adapted to detect vibrations transferred to said receiving device from the main body of the transmitting device, and adapted to output a detected signal to the processor, wherein said detected signal comprises said information signal obtained by demodulating said detected vibrations.

Other aspects and features of the present application will be apparent to those of ordinary skill in the art from a review of the following detailed description when considered in conjunction with the drawings.

### BRIEF DESCRIPTION OF THE DRAWINGS

Reference will now be made, by way of example, to the accompanying drawings which show an embodiment of the present application, and in which:

Figure 1 shows a block diagram of a user device to which the present application is applied in an example embodiment;

Figure 2 shows a pair of devices engaged in vibratory communication;

Figure 3 shows a simplified circuit diagram of an example embodiment of the vibrator driver;

Figure 4 shows a graph of an accelerometer output in an example embodiment of a receiving device; and

Figures 5 and 6 show, in flowchart form, an embodiment of a method of transmitting data from a handheld device using vibrations.

Similar reference numerals are used in different figures to denote similar components.

### DESCRIPTION OF PREFERRED EMBODIMENTS

The following description of one or more specific embodiments does not limit the implementation to any particular computer programming language or system architecture. The present application is not limited to any particular operating system, mobile device architecture, or computer programming language. Moreover, the present application may be embodied within a variety of user devices, including mobile devices, handheld devices, mobile telephones, personal digital assistants (PDAs) and other such devices.

Some of the embodiments described below involve a vibrator similar to those devices typically included in handheld devices for notification and user alert purposes. Such devices are often small DC motors with an eccentrically weighted rotor. It will be appreciated that there may be embodiments wherein a device other than a vibrator is used to generate vibrations. Other possibilities will be apparent to those of ordinary skill in the art after reviewing the following detailed description. Accordingly, the present application and references herein to a "vibrator" are not to be understood as being limited to eccentrically weighted motors.

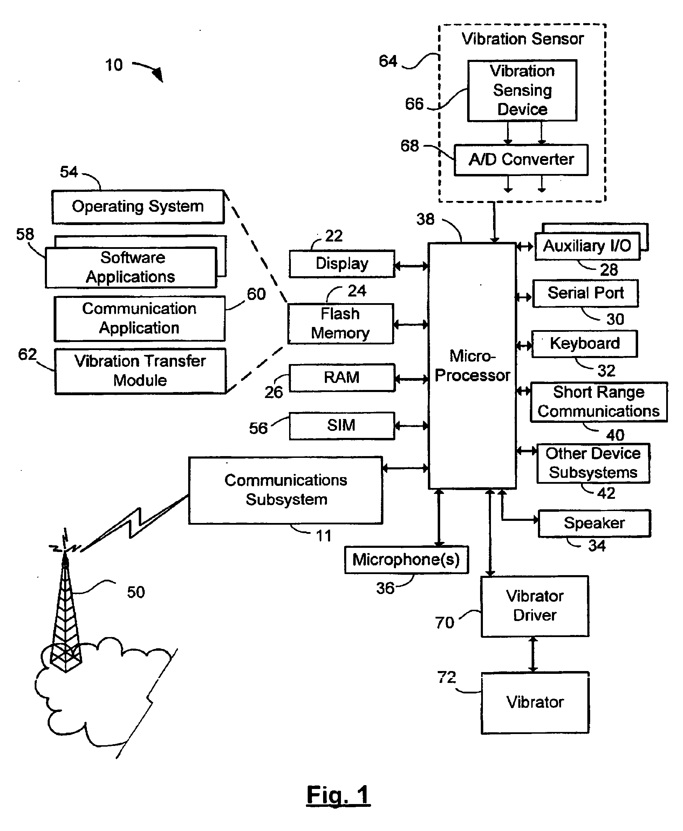

Referring now to the drawings, Figure 1 is a block diagram of an example embodiment of a handheld user device 10. In the example embodiment, the user device 10 is a two-way mobile communication device having data and possibly also voice communication capabilities. In an example embodiment, the device 10 has the capability to communicate with other computer systems on the Internet. Depending on the functionality provided by the device 10, in various embodiments the device may be a data communication device, a multiple-mode communication device configured for both data and voice communication, a mobile telephone, or a PDA enabled for wireless communication, among other things.

In this embodiment, the device 10 includes a communication subsystem 11. In one embodiment, the communication subsystem 11 may include a receiver, a transmitter, and associated components such as one or more, preferably embedded or internal, antenna elements, and a processing module such as a digital signal processor (DSP). As will be apparent to those skilled in the field of communications, the particular design of the communication subsystem 11 will be dependent upon the communication network in which the device 10 is intended to operate.

Signals received by the device 10 from a wireless communication network 50 are input to the receiver of the communication subsystem 11, which may perform such common receiver functions as signal amplification, frequency down conversion, filtering, channel selection and the like. In a similar manner, signals to be transmitted are processed, including modulation and encoding for example, by the DSP and input to the transmitter for digital to analog conversion, frequency up conversion, filtering, amplification and transmission over the wireless communication network 50.

The device 10 includes a microprocessor 38 that controls the overall operation of the device. The microprocessor 38 interacts with the communications subsystem 11 and also interacts with further device subsystems such as a display 22, flash memory 24, random access memory (RAM) 26, auxiliary input/output (I/O) subsystems 28, serial port 30, keyboard or keypad 32, speaker 34, microphone 36, a short-range communications subsystem 40, and any other device subsystems generally designated as 42.

Operating system software 54 and various software applications 58 used by the microprocessor 38 are, in one example embodiment, stored in a persistent store such as flash memory 24 or a similar storage element. Those skilled in the art will appreciate that the operating system 54, software applications 58, or parts thereof, may be temporarily loaded into a volatile store such as RAM 26. it is contemplated that received communication signals may also be stored to RAM 26.

The microprocessor 38, in addition to its operating system functions, preferably enables execution of software applications 58 on the device. A predetermined set of software applications 58 which control basic device operations, including data and voice communication applications for example, will normally be installed on the device 10 during manufacture. Further software applications 58 may also be loaded onto the device 10 through the network 50, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a data communication mode, a received signal such as a text message or web page download will be processed by the communication subsystem 11 and input to the microprocessor 38, which will preferably further process the received signal for output to the display 22, or alternatively to an auxiliary I/O device 28. A user of device 10 may also compose data items within a software application 58, such as email messages for example, using the keyboard 32 in conjunction with the display 22 and possibly an auxiliary I/O device 28 such as, for example, a thumbwheel. Such composed items may then be transmitted over a communication network through the communication subsystem 11.

The serial port 30 in Figure 1 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth^{™} communication module to provide for communication with similarly enabled systems and devices.

Wireless communication network 50 is, in an example embodiment, a wireless packet data network, (e.g. Mobitex^{™} or DataTAC^{™}), which provides radio coverage to mobile devices 10. Wireless mobile network 50 may also be a voice and data network such as GSM (Global System for Mobile Communication) and GPRS (General Packet Radio System), CDMA (Code Division Multiple Access), or various other third generation networks such as EDGE (Enhanced Data rates for GSM Evolution) or UMTS (Universal Mobile Telecommunications Systems).

The device 10 may include a communication application 60 for communicating with other handheld mobile devices or with stationary terminals like kiosks, personal computers, laptops, etc. The communication application 60 may include, for example, an application for utilizing the short-range communications link 40. In one embodiment, the communication application 60 is for engaging in Bluetooth-based communications with another device or terminal.

In many instances, the user of the device 10 exchanges a PIN or other code with another device or a terminal. For example, when using the communication application 60, the device 10 may seek to establish a secure encrypted link by exchanging a PIN or seed number that is subsequently used by both parties to generate encryption key pairs. In order to securely exchange this PIN or seed number, a separate communication path is used. In one embodiment, the users of the respective devices simply orally exchange PIN values and enter them manually using the keypads or buttons of the respective devices. In another example, the user of the device 10 may seek to establish a secure link between the device 10 and a terminal or kiosk. The user may be obliged to manually enter a PIN or other code into either the device 10 or the kiosk in order to establish the secure encrypted session. Those skilled in the art wiii be familiar with other scenarios in which a user may desire to securely exchange a small amount of data between the device and another device or a terminal.

The device 10 includes a vibrator 72 and a vibrator driver 70. In some embodiments, the vibrator driver 70 may be incorporated, wholly or partly, within the microprocessor 38. The vibrator 72 is adapted to vibrate the housing of the device 10 in response to a drive signal provided by the vibrator driver 70. The vibrator driver 70 outputs the drive signal based upon control signals received from the microprocessor 38. In some embodiments, the vibrator 72 vibrates the device 10 to alert the user to an incoming voice call and/or a received text or electronic message. In this respect, the vibrator 72 functions to alert the user to occurrence of an event. Accordingly, the vibrator 72 is adapted to vibrate with sufficient intensity to be sensed by the user. The vibrations may be accompanied by an auditory signal produced by the speaker 34. Vibrations for the purpose of user alerts are typically of a high enough intensity sufficient for the user to physically sense the vibrations through clothing and are of a duration of approximately 1 second. In many embodiments, the vibrations for user alert purposes are of sufficient intensity to be audible and to move the device when positioned on a hard surface, such as a table top.

The device 10 also includes a vibration sensor 64. The vibration sensor 64 includes a vibration sensing device 66 and, if necessary, an analog-to-digital (A/D) converter 68 for providing a digital vibration signal to the microprocessor 38. The vibration sensing device 66 may comprise an accelerometer in some embodiments, although in other embodiments the vibration sensing device 66 may comprise other vibrational sensors; for example, sensors based upon piezoelectric elements. The accelerometer may include a microelectomechanical system (MEMS), such as a capacitive accelerometer. Other accelerometers, including piezoelectric, piezoresistive and gas-based accelerometers, may be used. By way of example, in one embodiment the accelerometer may be a LIS3L02AQ tri-axis analog accelerometer from STMicroelectronics of Geneva, Switzerland. In some embodiments, the vibration sensing device 66 and A/D converter 68 may be incorporated into a single integrated device, for example the LIS3L02DQ tri-axis accelerometer with I²C or SPI interface from STMicroelectronics. The selection of an appropriate vibration sensor 64 may be based upon the frequency response range and the sensitivity response of the device, which in turn are impacted by the choice of vibrating source.

For example, a dual axis accelerometer may output an x-axis signal and a y-axis signal. A tri-axis device outputs signals for orthogonal x-, y-, and z-axes. The output signals may be analog voltages proportional to accelerative force in the axis direction. For example, at least one known tri-axis accelerometer outputs a voltage that corresponds to a range of positive and negative linear accelerations of ±1.7*g*. The vibration sensor 64 may also include various filters, signal conditioners, etc., for conditioning the output signals from the vibration sensing device 66, as will be appreciated by those of ordinary skill in the art.

In one aspect of the present application, the vibrator 72 may be used to communicate information with another device or a terminal using kinetic vibrations. The kinetic vibrations generated by the device 10 may be transferred to the other device by way of physical contact between the two devices. The other device or terminal may include a sensor, such as the vibration sensor 64, for detecting the vibrations produced by the vibrator 72 in the device 10.

In order to maintain confidentiality of the communications, the vibration intensity may be set at a level that is sufficient to enable the sensor in the other device or terminal to detect the vibrations, but at a level lower than the intensity level used for user alert purposes. The vibration sensor 64 may be capable of detecting fairly discrete vibrations that are difficult to detect by human touch.

The device 10 may include a vibration transfer module 62. The vibration transfer module 62 manages the control signal that the processor 38 outputs to the vibrator driver 70. In particular, the vibration transfer module 62 may modulate a drive signal with an information signal, so as to produce a modulated drive signal. In other words, the information is encoded in the vibration drive signal, and thereby encoded in the vibrations.

The vibration transfer module 62 may be implemented as a module, object or software routine that may be invoked by one or more software applications 58, the communication application 60, and/or the operating system 54. The vibration transfer module 62 may be incorporated as a part of the operating system 54. In one embodiment, the communication application 60 includes a device-to-device secure Bluetooth communication service. The Bluetooth service invokes the vibration transfer module 62 during set-up of the secure Bluetooth connection with a second device. The vibration transfer module 62 and/or the communication application 60 prompt the user to place the devices 10 in physical contact with each other, whereupon the devices 10 exchange PIN or seed value data through vibratory communications. The vibratory communications are managed by the vibration transfer module 62.

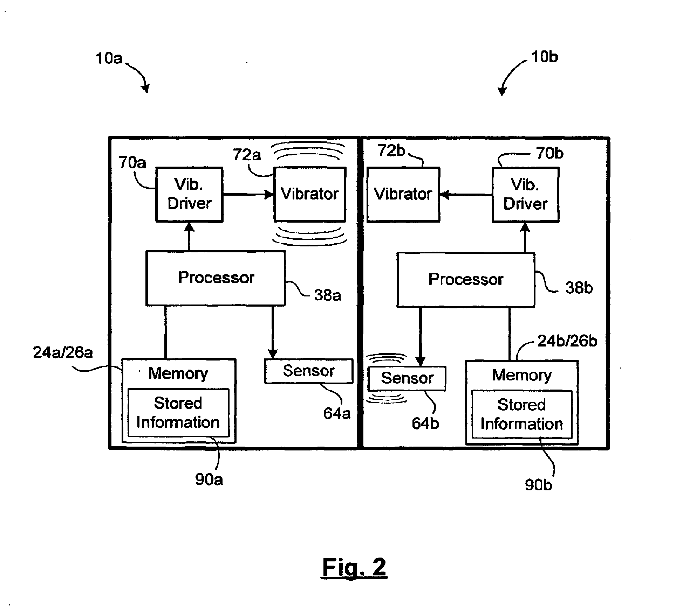

Reference is now made to Figure 2, which shows a pair of devices (indicated individually as 10a and 10b) engaged in vibratory communication.

The devices 10a and 10b includes respective processors 38a and 38b, vibrator drivers 70a and 70b, vibrators 72a and 72b, and sensors 64a and 64b. The memories 24a/26a and 24b/26b in the devices 10 may contain stored information 90a and 90b, respectively, wherein the stored information 90a and 90b is the information to be communicated between the devices 10. For example, in one embodiment the stored information 90a or 90b may include a PIN or seed value. In another embodiment the stored information 90a or 90b may include a password or login information.

Although Figure 2 depicts two handheld devices 10a and 10b, it will be appreciated that the present description is applicable to an embodiment wherein one of the devices 10a or 10b comprises a kiosk, personal computer, terminal or other fixed device.

In operation, one of the devices 10a, operating in a vibrator communications mode, generates a modulated drive signal. In particular, the processor 38a modulates a drive signal, which in one embodiment comprises a square wave, with an information signal. The information signal comprises or is derived from the stored information 90a. The modulated drive signal is supplied to the vibrator driver 70a and the vibrator 72a is activated in accordance with the modulated drive signal.

Vibrations created by the vibrator 72a in the first device 10a propagate through the casing of the first device 10a to the casing of the second device 10b when the devices 10 are in physical contact. The other device 10b detects vibrations in its casing by way of its sensor 64b. The sensed vibrations 64b are converted by the sensor 64b into a digital data signal received by the processor 38b. The processor 38b demodulates the digital data signal to obtain the encoded stored information 90a. In some cases, the two devices 10a and 10b may be placed on a table top or other surface together, such that vibrations are transferred to the other device through the intermediate surface. This embodiment may be less secure, since a third device may detect vibrations on the surfaces as well; although, it would permit multi-party vibratory communications. In yet another embodiment, the sensor 64b in the second device 10b may include a time-of-flight ranging device for detecting the vibrations from a remote distance by bouncing an electromagnetic wave off the casing of the first device 10a and detecting vibrations in the reflected signal received back at the second device 10b.

Those skilled in the art will appreciate that many types of modulation may be employed. A basic type of modulation is on-off keying, wherein logic bits are represented by the presence or absence of signal. Some embodiments may employ Manchester encoding. Other methods of encoding data may be used; however, the type of modulation may be restricted by the noise and frequency characteristics of vibratory communication in particular implementations. In some embodiments, it may be possible to use frequency or phase based encoding schemes.

The turn-on time of the vibrator 72a or 72b may be approximately 50 milliseconds in some embodiments, meaning that short bursts of transmission data may be attainable. Transmission rates may be constrained by the turn-on time and braking time of the vibrators 72a and 72b, the settling time for resonation of the respective housings of the devices 10a and 10b, and the sampling rate at the receiving device. A suitable vibrator for some implementations may be the 1.3V RS-2561 vibrator motor from Sanyo North America Corporation, of Bensenville, IL.

It will be appreciated that the receiving device 10b may apply filtering or smoothing to data detected by the sensor 64b. in one embodiment, a sampling rate of greater than four times the bit rate may be used for detecting data at the sensor 64b. Those skilled in the art will appreciate the range of appropriate sampling rates, taking into account Nyquist criteria and the fact that the housings of the devices 10 may continue to resonate for a short period after the vibration source has ceased transmissions. Accordingly, each positive bit in an on-off keying embodiment may have a certain settling time at its falling edge.

It will also be appreciated that if the receiving device 10b is moved or rotated during transmission, the sensor 64b may output a different baseline signal, *i.e.* its DC offset or bias may shift during transmission due to the change in static acceleration response. Accordingly, in some embodiments, the device 10b may monitor the sensor 64b output data baseline and make appropriate adjustments to ensure it is able to detect changes in logic levels. For example, a tracking filter may feed a signal to a comparator that is being used to distinguish logic level 1 from logic level 0 to adjust operation of the comparator to eliminate the effect of shifts in static acceleration on the device. This or similar static acceleration compensation may be implemented using hardware, software or a combination thereof.

The communication protocol employed by the devices 10a and 10b may include use of a header to signal start of transmission. For example, a header of '101' may be used in an on-off keying embodiment to signal the start of a frame of data. This may enable the receiving device 10b to detect the start of frames more easily and establish synch, if required.

In some embodiments, the communication protocol may also provide for use of error checking fields or schemes, such as checksum, CRC, parity, etc.

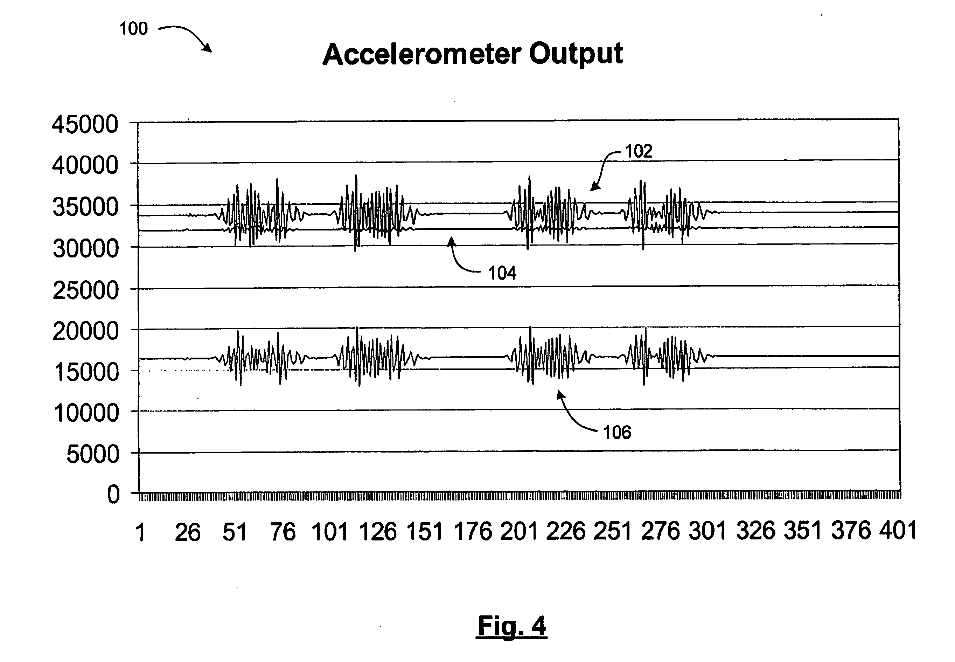

Reference is now made to Figure 4, which shows a graph 100 of the accelerometer output in an example embodiment of a receiving device. The accelerometer in the example embodiment comprises a three-axis accelerometer. The output signal from the x-axis is indicated with reference numeral 102. Reference numeral 104 indicates the y-axis output, and reference numeral 106 indicates the z-axis outputs.

The graph 100 shows the output signals generated in response to a vibratory transmission from a sending device. The transmission comprises a bit sequence of '10100101'. It will be noted that the x-axis output signal 102 and the z-axis output signal 106 includes four bursts of detected vibration activity corresponding to the four logic ones in the bit sequence. In this embodiment, the sending device employs on-off keying as the modulation scheme for encoding the bit sequence in the vibratory transmission.

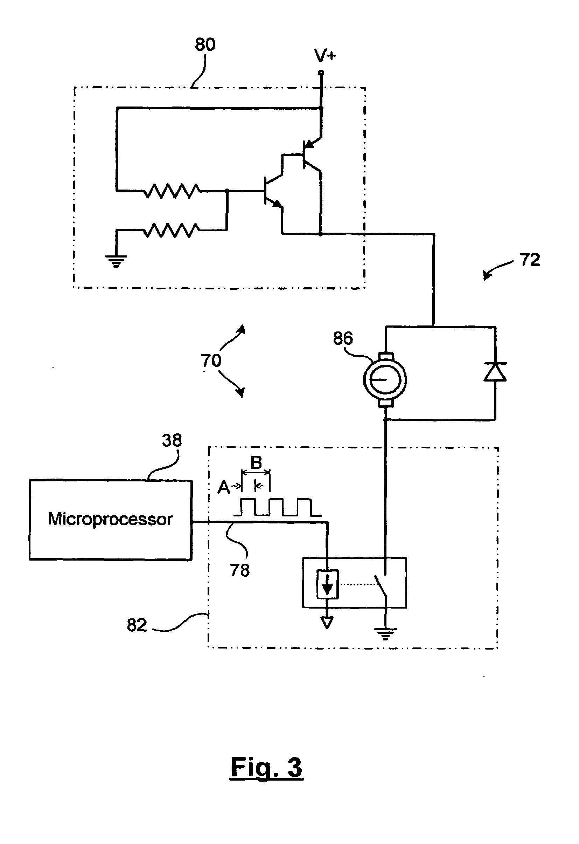

Reference is now made to Figure 3, which shows a simplified circuit diagram of an example embodiment of the vibrator driver 70. The microprocessor 38 outputs a modulated drive signal 78. The modulated drive signal 78 comprises a digital output.

In this embodiment, the vibrator driver 70 includes a first circuit 80 and a second circuit 82. The first circuit 80 is adapted to output a substantially constant voltage from a suitable supply voltage V+. The output of the first circuit 80 is coupled to an input terminal of the vibrator 72. The vibrator 72 includes a DC motor 86 that features an eccentrically weighted rotor. The other terminal of the vibrator 72 is coupled to the second circuit 82. The second circuit 82 is adapted to selectively couple the other terminal of the vibrator 72 to ground, thereby allowing current to flow in the motor 86.

The motor 86 rotates at a speed determined by the current, which in turn is determined by the duty cycle (A/B) of the pulse-width modulated (PWM) digital modulated drive signal 78. Accordingly, the intensity of the vibrations may be varied by varying the duty cycle (A/B) of the PWM modulated drive signal 78.

In one embodiment, the intensity of the vibrations produced by the motor 86 is adjusted downwards through adjusting the duty cycle (A/B) so as to be reasonably discreet, while maintaining sufficient kinetic energy to enable vibratory communications in accordance with the present application.

In one embodiment, the second circuit 82 may be a part of the microprocessor 38. Those of ordinary skill in the art will be familiar with other drive circuits for supplying suitable current to drive the vibrator 72.

Example embodiments of other vibration drive circuits and methods are described in US Patent No. 7,019,622, filed May 27, 2004, and owned in common herewith.

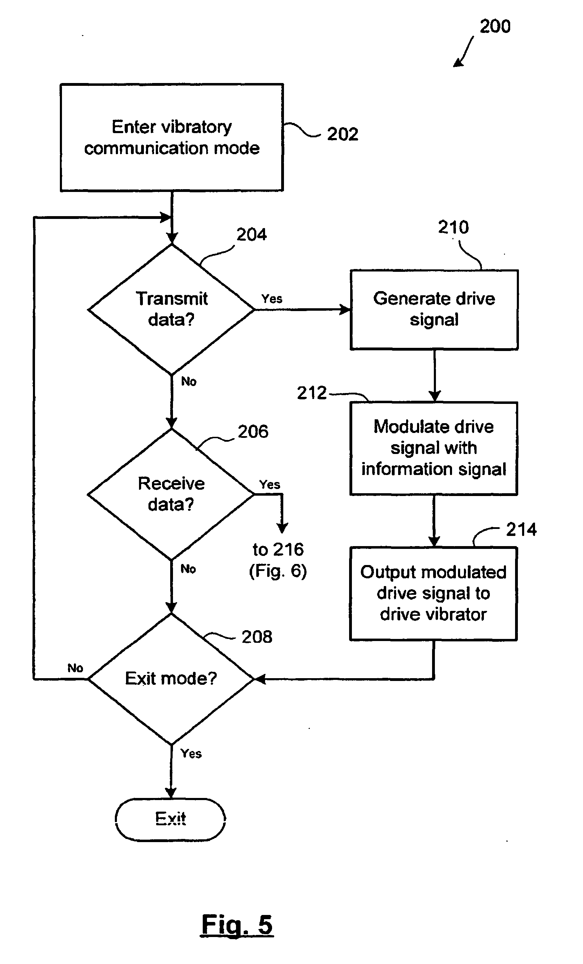

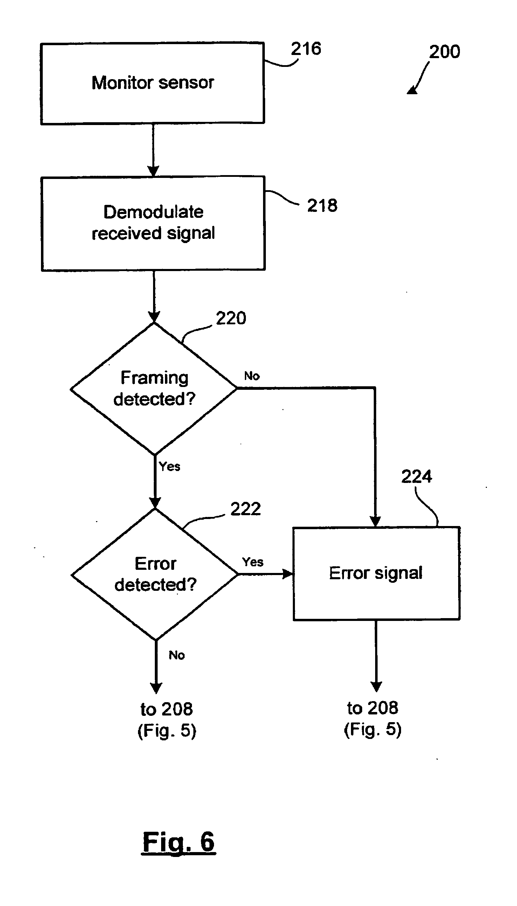

Reference is now made to Figures 5 and 6, which show, in flowchart form, an embodiment of a method 200 of transmitting data from a handheld device using vibrations. The method begins in step 202 when the device enters a vibratory communication mode. In this step a user may be prompted to place the device in physical contact with the other party to the communication, such as another handheld device. In some embodiments, this may be facilitated by holding both devices back-to-back. The devices may confirm that they are in vibratory communication with each other at this step by performing a handshake protocol to determine whether each device is capable of sending and receiving vibratory data. The handshake protocol may alternatively be incorporated into the subsequent steps in the method 200 described below.

As described above, the vibratory communication mode may be triggered by launch of a vibration transfer module or software application. In some embodiments, the launch of the vibratory transfer module may be initiated by the user or may be triggered by a communication application that requires vibratory exchange of data to facilitate set-up of another communication path or encryption scheme.

Once the device has entered the vibratory communication mode in step 202, then it determines whether it is to transmit data. The device may base its determination on a protocol, such as key exchange protocol or handshake protocol. In steps 204 and 206, the device determines whether it is to transmit or receive data, respectively. In step 208, the device assesses whether it is to exit the vibratory communication mode. For example, if the established protocol is complete and the necessary data has been exchanged, then the device may exit the vibratory communication mode. If it is to remain in this mode, then the method 200 returns to step 204.

If the device is transmitting data, then from step 204 the method proceeds to step 210. In step 210 the device generates the drive signal. As noted above, the drive signal may have a duty cycle that results in a vibration intensity sufficient to enable communications but significantly less intense than the vibrations normally associated with the incoming message alert function associated with vibrations in handheld devices.

The drive signal is then modulated in step 212 with an information signal. The information signal may be binary data stored in memory in the device. For example, the information signal may be a bit sequence. The modulation applied in step 212 is, in one embodiment, on-off keying.

The modulated drive signal is then output to the vibrator or vibrator driver in step 214. The vibrator is then activated in accordance with the modulated drive signal so as to propagate the modulated drive signal through the device casing in the form of vibrations.

Following the transmission, the method 200 returns to step 208.

If the device is receiving data, then from step 206 the method 200 proceeds to step 216. In step 216, data is gathered from the sensor in the receiving device regarding detected vibrations. Constant monitoring of the sensor output may prove too processor-intensive in some applications, so only periodic sampling/reading of the sensor data may be employed. The sensor provides an indication as to the level of vibrations to which the casing of the receiving device is subjected. If the receiving device is in contact with a transmitting device, then its sensor may produce a received signal that corresponds to the transmitted modulated drive signal. It will be appreciated that the received signal output by the sensor may be sampled, digitized and input to the processor for further processing and analysis.

In step 218, the received signal (or the sampled received signal) is demodulated. In an embodiment employing on-off keying the demodulation may involve detecting and distinguishing between periods that indicate no or little vibration and periods that indicate detected vibrations. Those skilled in the art will appreciate the operations applied in demodulating various modulation schemes. In some cases appropriate signal filtering may be applied to reduce noise components and improve detection/demodulation.

The receiving device may then, in step 220, attempt to detect framing (if used) by identifying headers or other markers or indicators. The device may also apply error detection schemes or checks in step 222. In either case, a transmission failure may be detected, whereupon the method 200 may proceed to step 224 to output an error signal or error message. The error signal may be associated with a retransmission of the unsuccessful communication. The error signal may also be output to a display or other output device to notify the user.

Those skilled in the art will appreciate that, in some embodiments, some of the foregoing steps may be performed in other sequences or contemporaneously. In some cases, some of the steps may be omitted or additional steps may be added without materially altering the operation of the method 200.

The teachings of the present application may be embodied in other specific forms within the scope of the invention, which is uniquely defined by the appended claims.

## Claims

1. A method of transmitting signals from a first device (10a) to a second device (10b), the first device (10a) comprising a main body and a vibration device (72a), the second device (10b) comprising a sensor (64b) for detecting vibrations, **characterised in that** the method comprises the steps of:
creating physical contact between the main body of the first device (10a) and the second device (10b);
generating a drive signal for driving the vibration device (72a);
modulating the drive signal with an information signal (90a) to generate a modulated driving signal (78);
vibrating the main body by driving the vibration device (72a) with the modulated driving signal (78);
detecting vibrations transferred from the main body to the second device (10b) using the sensor (64b); and
obtaining the information signal from the detected vibrations.

2. The method as claimed in claim 1, **characterised in that** the step of detecting results in a detected signal from the sensor (64b), and wherein said step of obtaining comprises demodulating the detected signal.

3. The method as claimed in claim 1 or claim 2, wherein the sensor (64b) comprises an accelerometer.

4. The method claimed in any one of claims 1 to 3, **characterised in that** the information signal (90a) comprises a seed value for establishing an encrypted communications link.

5. The method claimed in any one of claims 1 to 4, **characterised in that** the step of modulating comprises modulating the drive signal with the information signal (90a) using on-off keying.

6. The method claimed in any preceding claim, **characterised in that** said second device (10b) includes a casing, and wherein said step of detecting comprises detecting vibrations induced in the casing of the second device (10b.

7. The method claimed in any preceding claim, **characterised in that** said step of creating physical contact comprises physically connecting said first device (10a) and said second device (10b) via an intermediate surface.

8. A system for exchanging signals between two devices (10a, 10b), the system comprising a first device (10a) and a second device (10b), the first device (10a) and second device (10b) each comprising a processor (38), and a memory (24, 26) connected to the processor (38), and **characterised in that** the first device (10) comprises:
a main body;
a vibration device (72) housed within said main body and generating vibrations in response to a modulated driving signal to vibrate said main body; and
a vibration driver (70) operating under the control of said processor (38) and generating the modulated driving signal,
wherein said modulated driving signal comprises a drive signal modulated by an information signal (90) stored in said memory, and
said second device comprises:
a sensing device (64, 66) adapted to detect vibrations transferred to said second device (10b) from said main body, and adapted to output a detected signal to the processor (38),
wherein said detected signal comprises said information signal (90) obtained by demodulating said detected vibrations.

9. The system claimed in claim 8, **characterised in that** said sensing device (64, 66) comprises an accelerometer.

10. The system claimed in claim 8 or 9, **characterised in that** said vibration device (72) comprises a DC motor having an eccentrically weighted rotor.

11. The system claimed in any one of claims 8 to 10, **characterised in that** the information signal (90) comprises a seed value for establishing an encrypted communications link.

12. The system claimed in any one of claims 8 to 10, **characterised in that** the modulated driving signal comprises the drive signal modulated by the information signal (90) using on-off keying.

13. The system claimed in any one of claims 8 to 12, **characterised in that** said second device (10b) includes a casing, and wherein said sensing device is adapted to detect vibrations induced in the casing of the second device (10b).

14. The system claimed in claim 13, **characterised in that** said kinetic transfer of vibrations comprises transfer of vibrations through an intermediate surface.

15. A receiving device for receiving signals from a transmitting device, the transmitting device having a main body, a vibration device (72) housed within said main body and generating vibrations of said main body in response to a modulated driving signal; and a vibration driver (70) for generating the modulated driving signal, wherein the modulated driving signal comprises a drive signal modulated by an information signal (90), and wherein the receiving device comprises:
a casing;
a processor (38); and
a sensing device (64, 66) adapted to detect vibrations transferred to said receiving device from the main body of the transmitting device, and adapted to output a detected signal to the processor (38),
wherein said detected signal comprises said information signal (90) obtained by demodulating said detected vibrations.

16. The receiving device claimed in claim 15, **characterised in that** said sensing device (64, 66) comprises an accelerometer.

17. The receiving device claimed in claim 16, **characterised in that** said sensing device (64, 66) further comprises an analog-to-digital converter for receiving an analog output from said accelerometer and generating said detected signal by digitizing said analog output.

18. The receiving device claimed in any one of claims 15 to 17, **characterised in that** the information signal (90) comprises a seed value for establishing an encrypted communications link.

19. The receiving device claimed in any one of claims 15 to 18, **characterised in that** the modulated driving signal comprises the drive signal modulated by the information signal (90) using on-off keying.

20. The receiving device claimed in any one of claims 15 to 19, further comprising a casing for housing said processor and said sensing device, and **characterised in that** said sensing device is adapted to detect vibrations induced in the casing of the receiving device.

21. The receiving device claimed in claim 20, **characterised in that** said kinetic transfer of vibrations comprises transfer of vibrations through an intermediate surface.

22. A computer program product for enabling an electronic device (10) to engage in communication with another electronic device, the another electronic device having a main body and a vibration device housed with the main body to generate vibrations in response to a modulated driving signal for vibrating the main body, the another electronic device further having a vibration driver (70) for generating the modulated driving signal, wherein said modulated driving signal comprises a drive signal modulated by an information signal (90), the electronic device having a sensor (64), the computer program product comprising a computer readable medium embodying program code means executable by a processor (38) of the electronic device for:
detecting vibrations transferred from said main body to the electronic device using the sensor (64); and
obtaining the information signal (90) from the detected vibrations.

## Patentansprüche

1. Verfahren des Übermittelns von Signalen von einem ersten Gerät (10a) an ein zweites Gerät (10b), wobei das erste Gerät (10a) einen Hauptkörper und eine Vibrationsvorrichtung (72a) umfasst, wobei das zweite Gerät (10b) einen Sensor (64b) zum Erfassen von Vibrationen umfasst, **dadurch gekennzeichnet, dass** das Verfahren folgende Schritte umfasst:
Herstellen eines physischen Kontakts zwischen dem Hauptkörper des ersten Geräts (10a) und dem zweiten Gerät (10b);
Erzeugen eines Steuersignals zum Steuern der Vibrationsvorrichtung (72a);
Modulieren des Steuersignals mit einem Informationssignal (90a), um ein moduliertes steuerndes Signal (78) zu erzeugen;
Zum-Vibrieren-Bringen des Hauptkörpers durch Steuern der Vibrationsvorrichtung (72a) mit dem modulierten steuernden Signal (78);
Erfassen von Vibrationen, die mittels des Sensors (64b) vom Hauptkörper auf das zweite Gerät (10b) übertragen werden; und
Beziehen des Informationssignals aus den erfassten Vibrationen.

2. Verfahren nach Anspruch 1, **dadurch gekennzeichnet, dass** der Schritt des Erfassens von Ergebnissen in einem erfassten Signal von dem Sensor (64b) her resultiert, und wobei der Schritt des Beziehens das Demodulieren des erfassten Signals umfasst.

3. Verfahren nach Anspruch 1 oder Anspruch 2, wobei der Sensor (64b) einen Beschleunigungsmesser umfasst.

4. Verfahren nach einem der Ansprüche 1 bis 3, **dadurch gekennzeichnet, dass** das Informationssignal (90a) einen Kernwert zum Herstellen einer verschlüsselten Kommunikationsverbindung umfasst.

5. Verfahren nach einem der Ansprüche 1 bis 4, **dadurch gekennzeichnet, dass** der Schritt des Modulierens das Modulieren des Steuersignals mit dem Informationssignal (90a) mittels Ein-Aus-Tastung umfasst.

6. Verfahren nach einem vorhergehenden Anspruch, **dadurch gekennzeichnet, dass** das zweite Gerät (10b) ein Gehäuse enthält, und wobei der Schritt des Erfassens das Erfassen von in dem Gehäuse des zweiten Geräts (10b) verursachten Vibrationen umfasst.

7. Verfahren nach einem vorhergehenden Anspruch, **dadurch gekennzeichnet, dass** der Schritt des Herstellens eines physischen Kontakts das physische Verbinden des ersten Geräts (10a) mit dem zweiten Gerät (10b) über eine dazwischen befindliche Fläche umfasst.

8. System zum Austauschen von Signalen zwischen zwei Geräten (10a, 10b), wobei das System ein erstes Gerät (10a) und ein zweites Gerät (10b), wobei das erste Gerät (10a) und das zweite Gerät (10b) jeweils einen Prozessor (38) umfassen, und einen Speicher (24, 26) umfasst, der mit dem Prozessor (38) verbunden ist, und **dadurch gekennzeichnet, dass** das erste Gerät (10a) Folgendes umfasst:
einen Hauptkörper;
eine Vibrationsvorrichtung (72), die in dem Hauptkörper untergebracht ist und Vibrationen als Reaktion auf ein moduliertes steuerndes Signal erzeugt, um den Hauptkörper zum Vibrieren zu bringen; und
ein Vibrationssteuerorgan (70), das unter der Kontrolle des Prozessors (38) arbeitet und das modulierte steuernde Signal erzeugt,
wobei das modulierte steuernde Signal ein Steuersignal umfasst, das von einem in dem Speicher abgelegten Informationssignal (90) moduliert wird, und
das zweite Gerät Folgendes umfasst:
eine Sensorvorrichtung (64, 66), die zum Erfassen von von dem Hauptkörper auf das zweite Gerät (10b) übertragenen Vibrationen angepasst ist, und für die Ausgabe eines erfassten Signals an den Prozessor (38) angepasst ist,
wobei das erfasste Signal das durch das Demodulieren der erfassten Vibrationen bezogene Informationssignal (90) umfasst.

9. System nach Anspruch 8, **dadurch gekennzeichnet, dass** die Sensorvorrichtung (64, 66) einen Beschleunigungsmesser umfasst.

10. System nach Anspruch 8 oder 9, **dadurch gekennzeichnet, dass** die Vibrationsvorrichtung (72) einen Gleichstrommotor mit einem außermittig beschwerten Rotor umfasst.

11. System nach einem der Ansprüche 8 bis 10, **dadurch gekennzeichnet, dass** das Informationssignal (90) einen Kernwert zum Herstellen einer verschlüsselten Kommunikationsverbindung umfasst.

12. System nach einem der Ansprüche 8 bis 10, **dadurch gekennzeichnet, dass** das modulierte Steuersignal das durch das Informationssignal (90) mittels Ein-Aus-Tastung modulierte Steuersignal umfasst.

13. System nach einem der Ansprüche 8 bis 12, **dadurch gekennzeichnet, dass** das zweite Gerät (10b) ein Gehäuse enthält, und wobei die Sensorvorrichtung zum Erfassen von in dem Gehäuse des zweiten Geräts (10b) verursachten Vibrationen angepasst ist.

14. System nach Anspruch 13, **dadurch gekennzeichnet, dass** die kinetische Übertragung von Vibrationen die Übertragung von Vibrationen über eine dazwischen befindliche Fläche umfasst.

15. Empfangendes Gerät zum Empfangen von Signalen von einem übermittelnden Gerät her, wobei das übermittelnde Gerät einen Hauptkörper aufweist, eine Vibrationsvorrichtung (72), die in dem Hauptkörper untergebracht ist und Vibrationen des Hauptkörpers als Reaktion auf ein moduliertes steuerndes Signal erzeugt; und ein Vibrationssteuerorgan (70) zum Erzeugen des modulierten steuernden Signals, wobei das modulierte steuernde Signal ein von einem Informationssignal (90) moduliertes Steuersignal umfasst, und wobei das empfangende Gerät Folgendes umfasst:
ein Gehäuse;
einen Prozessor (38); und
eine Sensorvorrichtung (64, 66), die zum Erfassen von von dem Hauptkörper des übermittelnden Geräts auf das empfangende Gerät übertragenen Vibrationen angepasst ist und für die Ausgabe eines erfassten Signals an den Prozessor (38) angepasst ist,
wobei das erfasste Signal das durch das Demodulieren der erfassten Vibrationen bezogene Informationssignal (90) umfasst.

16. Empfangendes Gerät nach Anspruch 15, **dadurch gekennzeichnet, dass** die Sensorvorrichtung (64, 66) einen Beschleunigungsmesser umfasst.

17. Empfangendes Gerät nach Anspruch 16, **dadurch gekennzeichnet, dass** die Sensorvorrichtung (64, 66) des Weiteren einen Analog-Digital-Umwandler zum Empfangen einer analogen Ausgabe von dem Beschleunigungsmesser her und Erzeugen des erfassten Signals durch das Digitalisieren der analogen Ausgabe umfasst.

18. Empfangendes Gerät nach einem der Ansprüche 15 bis 17, **dadurch gekennzeichnet, dass** das Informationssignal (90) einen Kernwert zum Herstellen einer verschlüsselten Kommunikationsverbindung umfasst.

19. Empfangendes Gerät nach einem der Ansprüche 15 bis 18, **dadurch gekennzeichnet, dass** das modulierte steuernde Signal das durch das Informationssignal (90) mittels Ein-Aus-Tastung modulierte Steuersignal umfasst.

20. Empfangendes Gerät nach einem der Ansprüche 15 bis 19, das des Weiteren ein Gehäuse zum Unterbringen des Prozessors und der Sensorvorrichtung umfasst, und **dadurch gekennzeichnet, dass** die Sensorvorrichtung zum Erfassen von in dem Gehäuse des empfangenden Geräts verursachten Vibrationen angepasst ist.

21. Empfangendes Gerät nach Anspruch 20, **dadurch gekennzeichnet, dass** die kinetische Übertragung von Vibrationen die Übertragung von Vibrationen über eine dazwischen befindliche Fläche umfasst.

22. Computerprogrammprodukt zur Ermöglichung dessen, dass sich ein elektronisches Gerät (10) an der Kommunikation mit einem weiteren elektronischen Gerät beteiligt, wobei das weitere elektronische Gerät einen Hauptkörper und eine Vibrationsvorrichtung aufweist, die in dem Hauptkörper untergebracht ist, um als Reaktion auf ein moduliertes steuerndes Signal Vibrationen zu erzeugen, um den Hauptkörper zum Vibrieren zu bringen, wobei das weitere elektronische Gerät des Weiteren ein Vibrationssteuerorgan (70) zum Erzeugen des modulierten steuernden Signals aufweist, wobei das modulierte steuernde Signal ein durch ein Informationssignal (90) moduliertes Steuersignal umfasst, das elektronische Gerät einen Sensor (64) aufweist, das Computerprogrammprodukt ein computerlesbares Medium umfasst, das Programmcodemittel verkörpert, die von einem Prozessor (38) des elektronischen Geräts ausführbar sind für:
das Erfassen von Vibrationen, die von dem Hauptkörper auf das elektronische Gerät mittels des Sensors (64) übertragen werden; und
das Erlangen des Informationssignals (90) aus den ermittelten Vibrationen.

## Revendications

1. Un procédé pour transmettre des signaux d'un premier dispositif (10a) à un deuxième dispositif (10b), le premier dispositif (10a) comportant un corps principal et un dispositif vibreur (72a), le deuxième dispositif (10b) comportant un capteur (64b) destiné à détecter des vibrations, **caractérisé en ce que** le procédé comporte les étapes de :
créer un contact physique entre le corps principal du premier dispositif (10a) et le deuxième dispositif (10b) ;
générer un signal d'entraînement destiné à entraîner le dispositif vibreur (72a) ;
moduler le signal d'entraînement avec un signal d'information (90a) afin de générer un signal d'entraînement modulé (78) ;
faire vibrer le corps principal en entraînant le dispositif vibreur (72a) avec le signal d'entraînement modulé (78) ;
détecter des vibrations transférées du corps principal au deuxième dispositif (10b) à l'aide du capteur (64b) ; et
obtenir le signal d'information à partir des vibrations détectées.

2. Le procédé tel que revendiqué dans la revendication 1, **caractérisé en ce que** l'étape de détecter a pour résultat un signal détecté à partir du capteur (64b), et dans lequel ladite étape d'obtenir comporte démoduler le signal détecté.

3. Le procédé tel que revendiqué dans la revendication 1 ou la revendication 2, dans lequel le capteur (64b) comporte un accéléromètre.

4. Le procédé revendiqué dans n'importe laquelle des revendications 1 à 3, **caractérisé en ce que** le signal d'information (90a) comporte une valeur de départ destinée à établir une liaison de communication cryptée.

5. Le procédé revendiqué dans n'importe laquelle des revendications 1 à 4, **caractérisé en ce que** l'étape de moduler comporte moduler le signal d'entraînement avec le signal d'information (90a) à l'aide d'une modulation tout ou rien.

6. Le procédé revendiqué dans n'importe quelle revendication précédente, **caractérisé en ce que** ledit deuxième dispositif (10b) comprend un boîtier, et dans lequel ladite étape de détecter comporte détecter des vibrations provoquées dans le boîtier du deuxième dispositif (10b).

7. Le procédé revendiqué dans n'importe quelle revendication précédente, **caractérisé en ce que** ladite étape de créer un contact physique comporte connecter physiquement ledit premier dispositif (10a) et ledit deuxième dispositif (10b) par l'intermédiaire d'une surface intermédiaire.

8. Un système pour échanger des signaux entre deux dispositifs (10a, 10b), le système comportant un premier dispositif (10a) et un deuxième dispositif (10b), le premier dispositif (10a) et le deuxième dispositif (10b) comportant chacun un processeur (38), et une mémoire (24, 26) connectée au processeur (38), et **caractérisé en ce que** le premier dispositif (10a) comporte :
un corps principal ;
un dispositif vibreur (72) logé à l'intérieur dudit corps principal et générant des vibrations en réponse à un signal d'entraînement modulé afin de faire vibrer ledit corps principal ; et
un pilote de vibrations (70) fonctionnant sous le contrôle dudit processeur (38) et générant le signal d'entraînement modulé,
dans lequel ledit signal d'entraînement modulé comporte un signal d'entraînement modulé par un signal d'information (90) stocké dans ladite mémoire, et
ledit deuxième dispositif comporte :
un dispositif de captage (64, 66) adapté pour détecter des vibrations transférées au dit deuxième dispositif (10b) à partir dudit corps principal, et adapté pour sortir un signal détecté sur le processeur (38),
dans lequel ledit signal détecté comporte ledit signal d'information (90) obtenu en démodulant lesdites vibrations détectées.

9. Le système revendiqué dans la revendication 8, **caractérisé en ce que** ledit dispositif de captage (64, 66) comporte un accéléromètre.

10. Le système revendiqué dans la revendication 8 ou 9, **caractérisé en ce que** ledit dispositif vibreur (72) comporte un moteur CC ayant un rotor lesté de façon excentrique.

11. Le système revendiqué dans n'importe laquelle des revendications 8 à 10, **caractérisé en ce que** le signal d'information (90) comporte une valeur de départ destinée à établir une liaison de communication cryptée.

12. Le système revendiqué dans n'importe laquelle des revendications 8 à 10, **caractérisé en ce que** le signal d'entraînement modulé comporte le signal d'entraînement modulé par le signal d'information (90) à l'aide d'une modulation tout ou rien.

13. Le système revendiqué dans n'importe laquelle des revendications 8 à 12, **caractérisé en ce que** ledit deuxième dispositif (10b) comprend un boîtier, et dans lequel ledit dispositif de captage est adapté pour détecter des vibrations provoquées dans le boîtier du deuxième dispositif (10b).

14. Le système revendiqué dans la revendication 13, **caractérisé en ce que** ledit transfert cinétique de vibrations comporte le transfert de vibrations par le biais d'une surface intermédiaire.

15. Un dispositif de réception destiné à recevoir des signaux d'un dispositif de transmission, le dispositif de transmission ayant un corps principal, un dispositif vibreur (72) logé à l'intérieur dudit corps principal et générant des vibrations dudit corps principal en réponse à un signal d'entraînement modulé ; et un pilote de vibrations (70) destiné à générer le signal d'entraînement modulé, dans lequel le signal d'entraînement modulé comporte un signal d'entraînement modulé par un signal d'information (90), et dans lequel le dispositif de réception comporte :
un boîtier ;
un processeur (38) ; et
un dispositif de captage (64, 66) adapté pour détecter des vibrations transférées au dit dispositif de réception à partir du corps principal du dispositif de transmission, et adapté pour sortir un signal détecté sur le processeur (38),
dans lequel ledit signal détecté comporte ledit signal d'information (90) obtenu en démodulant lesdites vibrations détectées.

16. Le dispositif de réception revendiqué dans la revendication 15, **caractérisé en ce que** ledit dispositif de captage (64, 66) comporte un accéléromètre.

17. Le dispositif de réception revendiqué dans la revendication 16, **caractérisé en ce que** ledit dispositif de captage (64, 66) comporte de plus un convertisseur analogique-numérique destiné à recevoir une sortie analogique dudit accéléromètre et à générer ledit signal détecté en numérisant ladite sortie analogique.

18. Le dispositif de réception revendiqué dans n'importe laquelle des revendications 15 à 17, **caractérisé en ce que** le signal d'information (90) comporte une valeur de départ destinée à établir une liaison de communication cryptée.

19. Le dispositif de réception revendiqué dans n'importe laquelle des revendications 15 à 18, **caractérisé en ce que** le signal d'entraînement modulé comporte le signal d'entraînement modulé par le signal d'information (90) à l'aide d'une modulation tout ou rien.

20. Le dispositif de réception revendiqué dans n'importe laquelle des revendications 15 à 19, comportant de plus un boîtier destiné à loger ledit processeur et ledit dispositif de captage, et **caractérisé en ce que** ledit dispositif de captage est adapté pour détecter des vibrations produites dans le boîtier du dispositif de réception.

21. Le dispositif de réception revendiqué dans la revendication 20, **caractérisé en ce que** ledit transfert cinétique de vibrations comporte le transfert de vibrations par le biais d'une surface intermédiaire.

22. Un produit de programme informatique destiné à permettre à un dispositif électronique (10) de prendre part à une communication avec un autre dispositif électronique, l'autre dispositif électronique ayant un corps principal et un dispositif vibreur logé avec le corps principal pour générer des vibrations en réponse à un signal d'entraînement modulé pour faire vibrer le corps principal, l'autre dispositif électronique ayant de plus un pilote de vibrations (70) destiné à générer le signal d'entraînement modulé, dans lequel ledit signal d'entraînement modulé comporte un signal d'entraînement modulé par un signal d'information (90), le dispositif électronique ayant un capteur (64), le produit de programme informatique comportant un support lisible par ordinateur incorporant un moyen de code de programme exécutable par un processeur (38) du dispositif électronique pour :
détecter des vibrations transférées dudit corps principal au dispositif électronique à l'aide du capteur (64) ; et
obtenir le signal d'information (90) à partir des vibrations détectées.
